(19) **Europäisches Patentamt / European Patent Office / Office européen des brevets**

(11) **EP 1 470 659 B1**

(12) **EUROPÄISCHE PATENTSCHRIFT**

(45) Veröffentlichungstag und Bekanntmachung des Hinweises auf die Patenterteilung:
**28.03.2007 Patentblatt 2007/13**

(51) Int Cl.:
*H04L 7/02* (2006.01)     *H04L 7/033* (2006.01)

(21) Anmeldenummer: **02777016.3**

(22) Anmeldetag: **06.09.2002**

(86) Internationale Anmeldenummer:
**PCT/EP2002/009996**

(87) Internationale Veröffentlichungsnummer:
**WO 2003/065637 (07.08.2003 Gazette 2003/32)**

(54) **VERFAHREN ZUR ABTASTPHASENREGELUNG**

METHOD FOR CONTROLLING THE SAMPLING PHASE

PROCEDE DE REGULATION DE PHASES D'ECHANTILLONNAGE

(84) Benannte Vertragsstaaten:
**FR GB**

(30) Priorität: **30.01.2002 DE 10203596**

(43) Veröffentlichungstag der Anmeldung:
**27.10.2004 Patentblatt 2004/44**

(73) Patentinhaber: **Infineon Technologies AG**
**81669 München (DE)**

(72) Erfinder:
- **ENGL, Bernhard**
  **83071 Stephanskirchen (DE)**
- **GREGORIUS, Peter**
  **81476 München (DE)**

(74) Vertreter: **Reinhard - Skuhra - Weise & Partner**
**Postfach 44 01 51**
**80750 München (DE)**

(56) Entgegenhaltungen:
WO-A-00/11830          WO-A-02/091582
US-A- 4 137 427        US-A- 4 376 309

- **GARDNER F M: "A BPSK/QPSK TIMING-ERROR DETECTOR FOR SAMPLED RECEIVERS" IEEE TRANSACTIONS ON COMMUNICATIONS, IEEE INC. NEW YORK, US, Bd. 34, Nr. 5, 1. Mai 1986 (1986-05-01), Seiten 423-429, XP000608506 ISSN: 0090-6778**

**Beschreibung**

Die Erfindung betrifft ein Verfahren zur Abtastphasenregelung für die Takt- und Datenrückgewinnung eines Datenempfangssignals.

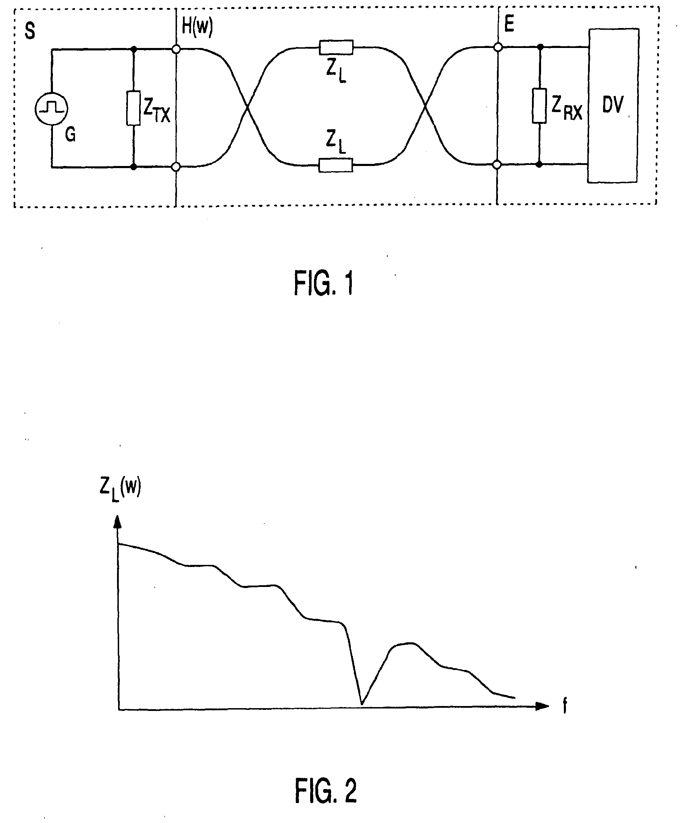

Wie in Figur 1 dargestellt, werden von einem Sender S Daten über ein Übertragungsmedium zu einem Empfänger E übertragen. Der Sender S enthält einen Datensignalgenerator G zur Erzeugung von Datensignalen, die über das Übertragungsmedium mit der Übertragungsfunktion $H(\omega)$ an den Empfänger übertragen werden. Dabei werden Daten über ein optisches Medium, wie beispielsweise Glasfaser, per Funk (beispielsweise Wireless LAN) über ein beliebiges Datenkabel, Leiterplattenleitungen oder Steckverbindungen von dem Sender S zu dem Empfänger übertragen. Die genannten Übertragungsmedien können dabei auch in beliebiger Weise kombiniert werden, so dass die Übertragungsfunktion $H(\omega)$ des Übertragungsmediums bei vielen Anwendungen weitgehend unbekannt ist. Zur Vermeidung von Reflektionen erhält der Sender bzw. Transmitter einen Anpassungswiderstand $Z_{TX}$ und der Empfänger E bzw. Receiver eine Abschlussimpedanz $Z_{RX}$. Mit den zunehmenden Datenübertragungsraten steigen auch die technischen Anforderungen an die Transceiverbausteine bzgl. deren Datenverarbeitungsgeschwindigkeit und der zulässigen Bitfehlerrate BER. Dabei werden insbesondere bei Transceiverbausteinen Daten im Gigahertzfrequenzbereich übertragen.

Der Leitungswiderstand $Z_L$ des Übertragungsmediums hängt stark von der jeweiligen Applikation ab. Bei Verbindungen zwischen zwei Chips kann man allgemein von relativ kurzen Signalübertragungsstrecken ausgehen, die in der Regel kürzer als 40 cm sind. Das Übertragungsmedium besteht bei dieser Applikation aus elektrischen Leiterbahnen auf einem Mehrlagen-PCB und den entsprechenden Durchkontaktierungen von dem Gehäuse des Transceiverbausteins zu den Leiterbahnen. In Frequenzbereichen oberhalb von 1 Gigahertz treten Skineffekte, Amplitudenreduktionen, Übersprechen und allgemein Verzerrungen durch ein nicht lineares Phasenverhalten des Übertragungsmediums auf. Im Gegensatz zu einer kabelgebundenen Datenübertragung kann von einem Amplituden-/Phasengang mit einer zur Wurzel der Frequenz-Charakteristik oder einer linearphasigen Besselcharakteristik des Kanals bei einem derartigen Übertragungskanal nicht mehr ausgegangen werden. Insbesondere Reflektionen und Resonanzen durch parasitäre Kapazitäten, Widerstände und Induktivitäten führen bei derartigen Anwendungen zu sehr unterschiedlichen Übertragungscharakteristiken je nach Aufbau der Übertragungsstrecke. Derartige Chip-zu-Chip Datenverbindungen sind von Reflektionen und einigen Resonanzstellen geprägt.

Figur 2 zeigt eine typische Frequenzcharakteristik des komplexen Widerstandes $Z_L$ einer Übertragungsstrecke. Der Widerstandsverlauf ist leicht wellenförmig, wobei die Wellen eine Folge der auftretenden Reflektionen sind. Darüber hinaus enthält der Leitungswiderstand $Z_L$ bei dem dargestellten Beispiel eine Resonanzstelle aufgrund parasitärer Kapazitäten und Induktivitäten bei der der komplexe Widerstand $Z_L$ des Übertragungsmediums stellenweise stark abfällt.

Eine Anpassung des Wellenwiderstandes in dem Sender S und in dem Empfänger E durch die Anpassungsimpedanzen $Z_{TX}$, $Z_{RX}$ ist bei einer derartigen Übertragungskanalcharakteristik in der Regel nicht möglich. Durch einen nicht linearen Phasenverlauf, d.h. nicht konstante Gruppenlaufzeit, durch Intersymbol Interferenzen, d.h. Überlagerungen von Impulsantworten auf der Seite des Empfängers, und durch Reflektionen werden die empfangenen Datenimpulse des übertragenen Datensignals sehr stark verzerrt. Durch Vorsehen eines einfachen Feedforward Equalizers innerhalb eines Empfängers E kann dabei lediglich der Einfluss der Intersymbol Interferenzen (ISI) jedoch nicht der Einfluss der auftretenden Reflektionen reduziert werden.

Ein Maß für die Qualität der Datenübertragung ist das sog. Augendiagramm. Bei dem Augendiagramm werden die Signalimpulse des empfangenen Datensignals überlagert, so dass ein "Auge" entsteht. Mit dem Augendiagramm lässt sich die Qualität des empfangenen Impulses und somit die Einflüsse durch den Übertragungskanal darstellen.

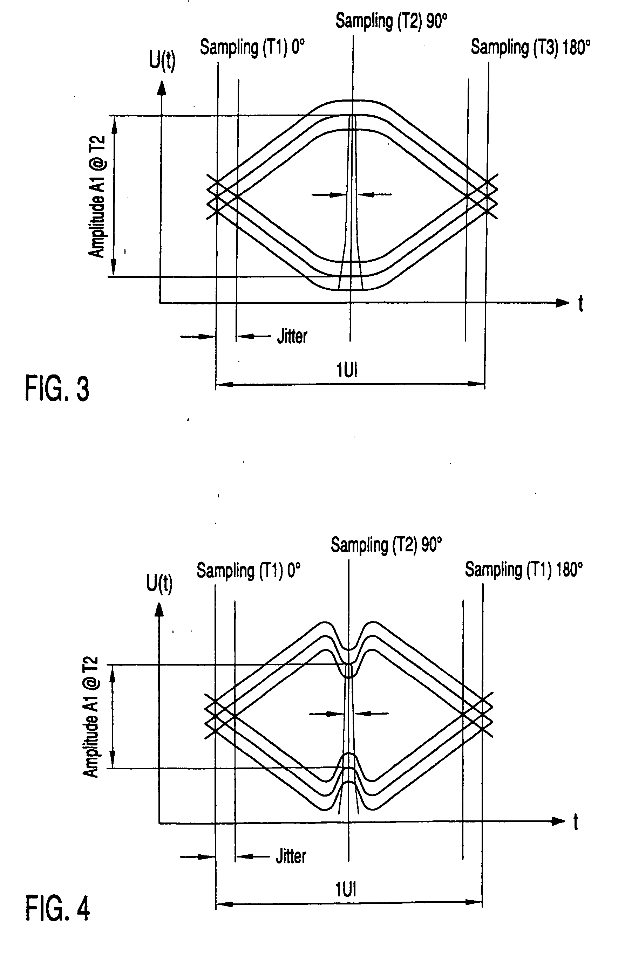

Figur 3 zeigt ein einfaches Augendiagramm. Auf der x-Achse ist der zeitliche Verlauf, nämlich eine UI (Unit Interval, d.h. Dauer eines Signalimpulses bzw. ½ Datenperiode) und auf der y-Achse die Amplitude des empfangenen Datensignals aufgetragen. Bei einem idealen Übertragungskanal ist das Auge sowohl in der x-Richtung als auch in der y-Richtung ausreichend geöffnet, so dass eine Datenrückgewinnung auf Seiten des Empfängers E problemlos möglich ist. Bei einem realen Übertragungskanal ist jedoch das Augendiagramm sowohl in der x-Richtung (durch sog. Flankenjitter) als auch in der y-Richtung (durch sog. Amplitudenjitter) entsprechend verengt.

Man unterscheidet zwischen nicht bandbreitenlimitierten Übertragungsmedien und bandbreitenlimitierten Übertragungsmedien. Nicht bandbreitenlimitierte Übertragungsmedien sind beispielsweise Glasfaserkabel. Bei derartigen nichtbandbreitenlimitierten Glasfaserkabeln wird allerdings eine Frequenzbandbreitenlimitierung durch die Empfangsdiode und den Transimpedanzverstärker hervorgerufen. Bei bandbreitenlimitierten Übertragungskanälen wird der störende Jitter durch den Transmitter bzw. Sender verursacht. Bei bandbreitenlimitierten Übertragungsmedien kommt zusätzlich zu dem Eigenjitter bzw. dem Rauschen des Transmitters bzw. Senders noch das Rauschen des Übertragungskanals hinzu, das zu einer weiteren Verminderung der Qualität des Augendiagramms führt.

Figur 4 zeigt beispielhaft ein Augendiagramm bei dem der Einfluss einer Signalreflektion im Übertragungskanal angedeutet ist. Bei dem in Figur 4 dargestellten Beispiel führt die Signalreflektion in dem Übertragungskanal zu einer Reduzierung der Amplitude in der Augenmitte. Die Lage der Reflektion ist bei dem dargestellten Beispiel rein willkürlich und ist nur zur Veranschaulichung zentriert dargestellt. Durch die Verengung, d.h. die Reduzierung der Signalamplitude beim Abtastzeitpunkt wird die Rückgewinnung des Datensignals im Vergleich zu dem in Figur 3 dargestellten Augendiagramm erschwert. Die zur Verfügung stehende Signalleistung ist zum Abtastzeitpunkt ($T_2$) reduziert. Diese führt zu einem schlechteren Signalrauschabstand und somit zu einer Erhöhung der Bit-Fehlerrate.

Schaltungsanordnungen zur Datenrückgewinnung werden auch als Clock & Data Recovery (CDR) - Schaltungen bezeichnet. Zur Datenrückgewinnung werden herkömmlicher Weise im wesentlichen zwei grundlegende Verfahren eingesetzt, nämlich ein sog. Phasealignment-Verfahren und ein sog. Phasepicking-Verfahren.

Bei dem Phasealignment-Verfahren bzw. der Phasenjustierung wird der Abtastzeitpunkt des Abtastimpulses zur Abtastung des empfangenen Datensignals auf die Augenmitte des empfangenen Datensignals justiert bzw. geregelt. Der Abtastimpuls weist eine absolute Phasenverschiebung von 90° zu dem Nulldurchgang bzw. dem Signalwechsel des Datenempfangssignals auf. Die Einstellung der Phase erfolgt mittels einer Regelschleife. Zur Datenrückgewinnung und Entjitterung wird hierzu meist ein flankengesteuertes D-Flip-Flop verwendet, das mit steigender Flanke am Takteingang das an dem Dateneingang anliegende Datensignal abtastet.

Bei dem sog. Phasepicking-Verfahren erfolgt eine Überabtastung des Datensignals durch eine Parallelschaltung von mehreren D-Flip-Flops. Eine Regelschaltung selektiert dann den Signalausgang eines D-Flip-Flops zur Datenrückgewinnung gemäß dem optimalen Abtastzeitpunkt.

Die beiden herkömmlichen Verfahren zur Datenrückerkennung können in unterschiedlicher Weise schaltungstechnisch realisiert werden. Das Phasealignment-Verfahren und das Phasepicking-Verfahren werden in IEEE JSSC, Dezember 1992 Seiten 1736-1946, Thomas Lee: "A 155-MHz Clock Recovery Delay- and Phase Locked Loop" und in IEEE JSSC, Dezember 1990, Seiten 1385-1394 von Paul R. Gray: "A 30-MHz Hybrid Analog/Digital Clock Recovery in 2-$\mu$m CMOS" beschrieben.

Bei nichtbandbreitenlimitierten Übertragungsmedien bzw. nahezu nicht bandbreitenlimitierten Übertragungsstrecken wird in der Regel das Phasealignment-Verfahren zur Datenrückgewinnung eingesetzt.

Bei bandbreitenlimitierten Übertragungsstrecken mit erhöhten Verzerrungen des Signals wird üblicherweise meist das Phasepicking-Verfahren zur Datenrückgewinnung eingesetzt.

Die beiden Grundverfahren zur Datenrückgewinnung können auch kombiniert werden.

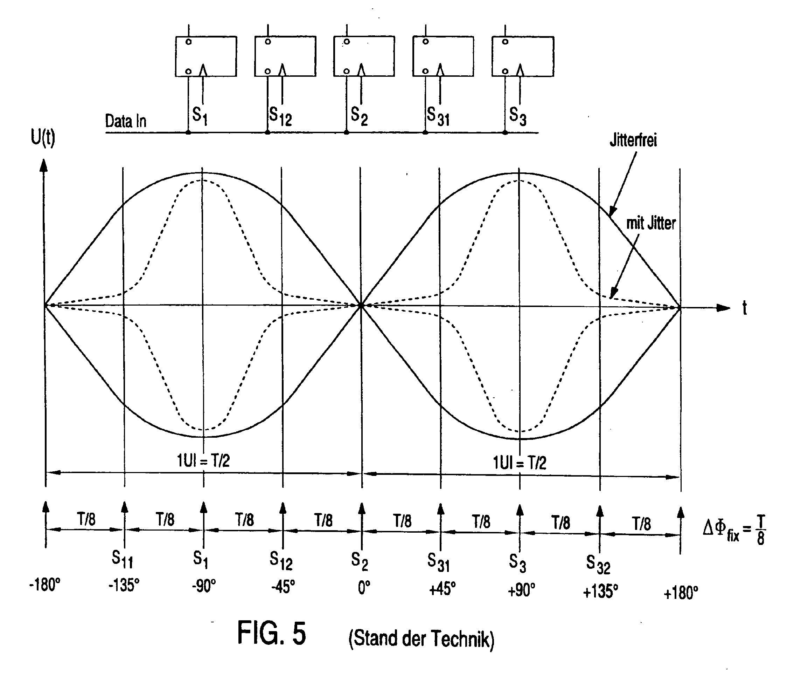

Figur 5 zeigt eine Abtastung eines seriellen Dateneingangssignals, bei der die empfangenen Daten durch -Phasealignment mit Überabtastung zurückgewonnen werden. Eine derartige Abtastphasenregelung wurde von J.D.H. Alexander entwickelt (siehe auch Electronics Letter, Oktober 1975, Seiten 541-542, J.D.H. Alexander: "Clock Recovery from Random Binary Signals"). Figur 5 zeigt eine Abtastschaltung mit parallel verschalteten D-Flip-Flops, deren Taktsignaleingänge Abtastsignalimpulse S zum Abtasten des seriellen Datensignals empfangen. Figur 5 zeigt zur Verdeutlichung zwei Augendiagramme des seriellen Dateneingangssignals, wobei ein jitterfreies Dateneingangssignal bei idealem Übertragungskanal mit durchgezogenen Linien und ein mit Jitter behaftetes Datenempfangssignal bei nicht idealem Übertragungskanal gestrichelt dargestellt ist. Wie man aus Figur 5 erkennen kann, führen die Störungen aufgrund des nicht idealen Übertragungskanals zu einem stark geschlossenen Auge, während das Augendiagramm bei einem idealen Übertragungskanal weit geöffnet ist.

Bei der herkömmlichen Abtastphasenregelung wird das Abtastsignal mittels einer Phasenregelschleife auf das serielle Dateneingangssignal synchronisiert bzw. eingeregelt. Dabei wird die Phasenabweichung zwischen dem Abtastsignal und der Phase des empfangenen Datensignals minimiert. Idealerweise liegt dabei ein Abtastimpuls (S2) synchron zu dem Signalflankenwechsel des empfangenen Datensignals.

Ein wesentlicher Nachteil des in Figur 5 dargestellten Verfahrens zur Abtastphasenregelung besteht darin, dass das empfangene Datensignal durch die Flip-Flops zu fest definierten Zeitpunkten erfolgt. Die Zeitabstände zwischen den Abtastimpulsen sind bei dem in Figur 5 dargestellten herkömmlichen Verfahren zur Abtastphasenregelung äquidistant und betragen bei dem in Figur 5 dargestellten Beispiel T/8, wobei T die Periode des empfangenen Datensignals ist.

Dabei gilt:

$$T = \frac{2}{DR} = \frac{1}{f_{Data}} = 2 \cdot UI$$

wobei DR die Datenübertragungsrate des empfangenen Datensignals und
UI die Dauer eines Empfangsimpulses ist.

Bei der Abtastung eines Datenempfangsimpulses mit nur einem Flip-Flop bzw. Abtastwert wird durch die Metastabilität des Flip-Flops aufgrund des reduzierten Signalrauschabstandes, der durch Reflektionen, Rauschen und internes bzw. externes Übersprechen hervorgerufen wird, eine fehlerfreie Datenrückgewinnung bzw. Datenrückerkennung nicht gewährleistet. Daher wird innerhalb der Dauer eines Empfangsimpulses (UI) die Anzahl der Abtastimpulse mittels einer Überabtastung erhöht.

Aufgrund der in Figur 5 dargestellten Abtastzeitpunkte, die ein starres Phasenverhältnis zueinander aufweisen, kann eine optimale Abtastung des Empfangsimpulses zu einem idealen Zeitpunkt nicht erreicht werden. Bei dem in Figur 5 dargestellten Beispiel besteht das konstante Abtastsignal aus äquidistanten Abtastimpulsen, die eine starre Phasendifferenz $\Delta\phi_{fix}$ von T/8 aufweisen. Eine Abtastung zu einem idealen Zeitpunkt, bei der die Signalenergie des empfangenen Datensignals optimal ausgenutzt wird, erfolgt hierbei nicht. Wie man aus Figur 5 erkennen kann, liegen beispielsweise die Abtastimpulse $S_{11}$, $S_{12}$, $S_{31}$, $S_{32}$ aufgrund des erheblichen Amplituden- und Phasenjitters des empfangenen Datensignals am Rande des stark geschlossenen Auges, so dass eine Abtastung zu Abtastwerten mit sehr geringer Signalenergie führt. Die Entscheider bzw. Flip-Flops können aufgrund der geringen Signalamplitude zu den Abtastzeitpunkten am Signaleingang an ihrem Ausgang kein eindeutiges Ausgangsdatensignal erzeugen, so dass es zu Fehlentscheidungen bei der Abtastung kommt. Hierdurch wird die Bit-Fehlerrate BER sehr stark erhöht.

Die WO 02/091582, veröffentlicht am 14. Nov. 2002 mit dem Prioritätsanspruch US 60/288374 vom 3. Mai. 2001 und somit eine Voröffentlichung im Sinne vor Art. 54(3) EPÜ, offenbart eine Schaltung zum Erzeugen eines digitalen Datensignals aus einem analogen Eingangssignal. Die Schaltung umfasst ein Master-Slave Flip-Flop mit einem Clock-Eingang, um das analoge Eingangssignal zu empfangen, eine Schaltung zum Erkennen der Amplitude des analogen Eingangssignals und zum Erzeugen eines entsprechenden Erkennungssignals und einen Phasenschieberschaltkreis, der abhängig vom Erkennungssignals ein Phasen verschobenes Signal an den Clock-Eingang liefert.

US4137427 (Pilost, Choquet et al.) offenbart die Merkmale a), c) und d) des Anspruches 1.

Es ist daher die Aufgabe der vorliegenden Erfindung, ein Verfahren zur Abtastphasenregelung für die Takt- und Datenrückgewinnung eines Datensignals zu schaffen, das die Signalenergie des Datenempfangssignals optimal ausnutzt und die Bit-Fehlerrate bei der Abtastung minimiert.

Diese Aufgabe wird erfindungsgemäß durch ein Verfahren mit den im Patentanspruch 1 angegebenen Merkmalen gelöst.

Die Erfindung schafft ein Verfahren zur Abtastphasenregelung für die Takt- und Datenrückgewinnung eines Datensignals mit den folgenden Schritten, nämlich Abtasten des empfangenen Datensignals mit einem ersten Abtastsignal, das aus äquidistanten Abtastimpulsen besteht, Minimieren der Phasenabweichung zwischen dem ersten Abtastsignal und der Phase des empfangenen Datensignals zur Erzeugung eines eingeregelten zweiten Abtastsignals, Abtasten des empfangenen Datensignals mit einem zweiten eingeregelten Abtastsignal zur Erzeugung von Abtastdatenwerten, Integrieren der Abtastdatenwerte des abgetasteten Datensignals zu einem Summenwert, und
Regeln in einer Rückkopplungsschleife der Phase von Abtastimpulsen des eingeregelten zweiten Abtastsignals bis der integrierte Summenwert einen einstellbaren Schwellenwert überschreitet.

Bei einer bevorzugten Ausführungsform des erfindungsgemäßen Verfahrens wird ein Detektionssignal erzeugt, das den eingeregelten Zustand anzeigt, wenn der integrierte Summenwert den einstellbaren Schwellenwert überschreitet.

Zum Einregeln der Phase des ersten Abtastsignals wird vorzugsweise die Phasenabweichung zwischen dem ersten Abtastsignal und dem empfangenen Datensignal durch eine Phasenauswerteanordnung ausgewertet und die Phase des Abtastsignals durch einen Haupt-Phasenschieber verändert, bis die Phasenabweichung Null beträgt.

Das eingeregelte zweite Abtastsignal besteht vorzugsweise aus mindestens zwei zeitversetzten Abtastimpulsfolgen,
wobei die Abtastimpulse bei einer konstanten Abtastimpulsfolge einen konstanten Zeitabstand zueinander aufweisen,
und wobei die Abtastimpulse einer variablen Abtastimpulsfolge einen variablen Zeitabstand zueinander aufweisen.

Das empfangene Datensignal besteht vorzugsweise aus einer Folge von Datenimpulsen mit konstanter Datenimpulsdauer (UI).

Der Zeitabstand ($\Delta\phi_{fix}$) zwischen den Abtastimpulsen der konstanten Abtastimpulsfolge ist vorzugsweise gleich der halben Datenimpulsdauer (UI/2).

Bei einer bevorzugten Ausführungsform des erfindungsgemäßen Verfahrens besteht die konstante Abtastimpulsfolge aus ersten Abtastimpulsen, die zeitsynchron mit dem Signalflankenwechsel des empfangenen Datensignals sind und
aus zweiten Abtastimpulsen, die eine halbe Datenimpulsdauer (UI/2) zeitversetzt zu dem Signalflankenwechsel des empfangenen Datensignals sind.

Bei einer besonders bevorzugten Ausführungsform des erfindungsgemäßen Verfahrens zur Abtastphasenregelung wird der Zeitabstand ($\Delta\phi_{variabel}$) zwischen den Abtastimpulsen der variablen Abtastimpulsfolge und den zweiten Abtastimpulsen der konstanten Abtastimpulsfolge verkleinert bis der integrierte Summenwert den einstellbaren Schwellenwert überschreitet.

Ein durch einen zweiten Abtastimpuls der konstanten Abtastimpulsfolge erzeugter Abtastdatenwert und die durch die beiden benachbarten Abtastimpulse der variablen Abtastimpulsfolge erzeugten Abtastdatenwerte werden vorzugsweise jeweils an einen Mehrfachentscheider angelegt, der in Abhängigkeit von den angelegten Abtastdatenwerden ein logisches Ausgangssignal erzeugt.

Die logischen Ausgangssignale der Mehrfachentscheider werden vorzugsweise durch einen Gleichrichter gleichgerichtet.

Bei dem empfangenen Datensignal handelt es sich vorzugsweise um ein serielles Datensignal.

Das serielle Datensignal wird bei einer bevorzugten Ausführungsform des erfindungsgemäßen Verfahrens durch parallel geschaltete Flip-Flops eines Abtasters abgetastet.

Der integrierte Summenwert wird mit dem Schwellenwert vorzugsweise durch einen Komparator verglichen.

Dabei wird der Schwellenwert vorzugsweise einprogrammiert.

Der Komparator erzeugt vorzugsweise ein Vergleichsausgangssignal, das durch eine nachgeschaltete Integratorschaltung integriert wird.

Das integrierte Vergleichsausgangssignal wird vorzugsweise an Neben-Phasenschieber angelegt, die den variablen Zeitabstand ($\Delta\phi_{variabel}$) zwischen Abtastimpulsen der variablen Abtastimpulsfolge und den zweiten Abtastimpulsen der konstanten Abtastimpulsfolge in Abhängigkeit von dem integrierten Vergleichsausgangssignal einstellen.

Die logischen Ausgangssignale der Mehrfachentscheider werden bei einer bevorzugten Ausführungsform des erfindungsgemäßen Verfahrens der Abtastphasenregelung durch eine Datenverarbeitungseinheit ausgewertet, wenn das Detektionssignal den eingeregelten Zustand anzeigt.

Im weiteren werden bevorzugte Ausführungsformen des erfindungsgemäßen Verfahrens unter Bezugnahme auf die beigefügten Figuren erläutert.

Es zeigen:

Figur 1      eine Datenübertragungsstrecke nach dem Stand der Technik;

Figur 2      eine komplexe Leitungsimpedanz bei einer realen Datenübertragungsstrecke;

Figur 3      ein Augendiagramm eines Datenempfangssignals;

Figur 4      ein Augendiagramm eines Datenempfangssignals bei auftretenden Reflektionen;

Figur 5      ein Diagramm eines herkömmlichen Verfahrens zur Abtastphasenregelung;

Figur 6      ein Augendiagramm zur Erläuterung des dem erfindungsgemäßen Verfahren zugrundeliegenden Abtastprinzips;

Figur 7      ein Diagramm zur Erläuterung der Funktionsweise des erfindungsgemäßen Verfahrens zur Abtastregelung;

Figur 8      ein Diagramm zur Erläuterung der Funktionsweise des erfindungsgemäßen Verfahrens zur Abtastphasenregelung;

Figur 9      ein Blockschaltbild einer erfindungsgemäßen Abtastphasenregelungsschaltung;

Figur 10      ein Ablaufdiagramm einer bevorzugten Ausführungsform des erfindungsgemäßen Verfahrens zur Abtastphasenregelung.

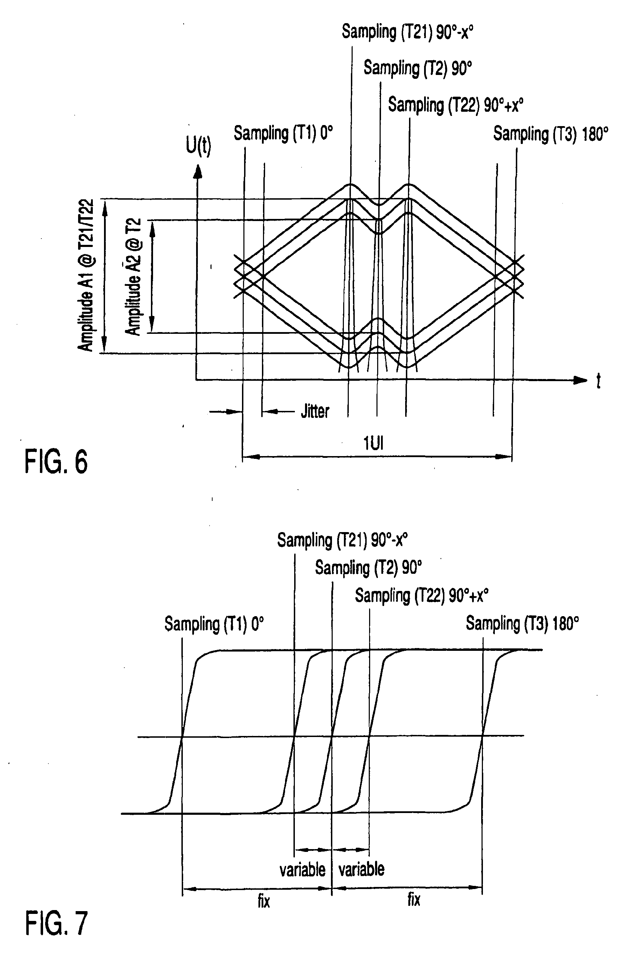

Figur 6 zeigt ein Augendiagramm zur Erläuterung des der Erfindung zugrundeliegenden Funktionsprinzips. Eine Abtastung des Datenempfangssignals zum Zeitpunk T2, d.h. 90° phasenversetzt zum Signalflankenwechsel, ist aufgrund des geringen Signalrauschabstandes zu diesem Zeitpunkt nicht günstig.

Bei dem erfindungsgemäßen Verfahren werden um den Abtastzeitpunkt T2 herum zusätzliche Abtastungen zu den Zeitpunkten T21 und T22 vorgenommen. Dabei stehen die Abtastzeitpunkte T21, T22 in einer festen Phasenbeziehung zu dem Abtastzeitpunkt T2. Der zeitliche Abstand zwischen den Neben-Abtastzeitpunkten T21, T22 und dem Hauptabtastzeitpunkt T2 ist variabel. Durch eine programmierbare Phasenlage der Neben-Abtastzeitpunkte T21, T22 wird eine optimale Auswertung des Datenempfangssignals mit maximaler Signalleistung gewährleistet. Dies führt zu einer sehr geringen Bitfehlerrate BER.

Bei einer erfindungsgemäß Abtastphasenregelung wird, wie in Figur 7, dargestellt, das Datenempfangssignal zu den Zeitpunkten T1 (0°), zu dem Zeitpunkt T2 (90°) und dem Zeitpunkt T3 (180°) in einem starren Phasenverhältnis zueinander abgetastet. Die Abtastimpulse, mit denen das Datenempfangssignal zu den Abtastzeitpunkten T21 (90°-x°) und T22 (90°+x°) abgetastet wird, dienen zur eigentlichen Datenrückgewinnung. Die Abtastimpulse zu den Zeitpunkten T1, T3 sind zur Phasenjustierung des Abtastsignals vorgesehen und werden durch Phasendetektoren innerhalb des Empfängers ausgewertet.

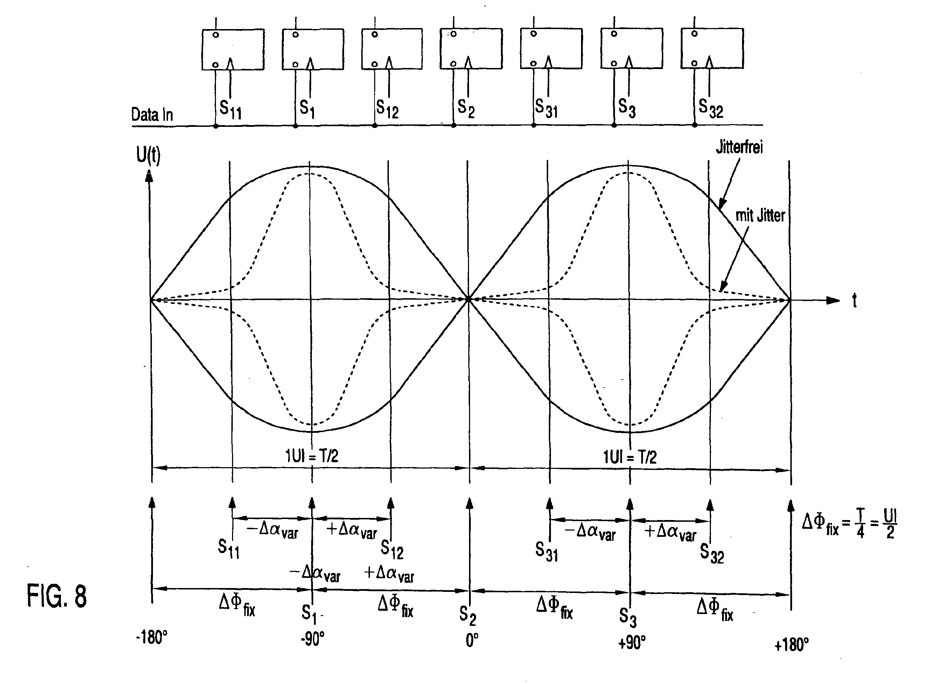

Figur 8 zeigt ein Diagramm zur Erläuterung der Funktionsweise der erfindungsgemäßen Abtastphasenregelung. Das Diagramm zeigt zwei Augendiagramme in zeitlicher Folge, die jeweils die Dauer eines Empfangsimpulses besitzen, d.h. die halbe Datenübertragungsperiode T. In dem Diagramm zeigt die durchgezogene Linie ein Augendiagramm bei idealem Datenübertragungskanal, während die gestrichelte Linie ein stark verrauschtes Auge bei nicht idealem Übertragungskanal darstellt.

Figur 8 zeigt die Situation nachdem das Abtastsignal bereits auf das empfangene Datensignal eingeregelt ist. Dabei ist der Abtastimpuls S2 zeitsynchron mit dem Signalflankenwechsel des Datenempfangssignals. Das eingeregelte Abtastsignal, wie es in Figur 8 dargestellt ist, besteht aus mindestens zwei zeitversetzten Abtastimpulsfolgen. Die Abtastimpulse ($S_1$, $S_2$, $S_3$) einer konstanten Abtastimpulsfolge weisen einen konstanten Zeitabstand ($\Delta\phi_{fix}$) zueinander auf. Demgegenüber weisen die Abtastimpulse ($S_{11}$, $S_{12}$, $S_{31}$, $S_{32}$) einer variablen Abtastimpulsfolge einen variablen Zeitabstand zueinander und zu den Abtastimpulsen der konstanten Abtastim-

pulsfolge $S_1$, $S_2$, $S_3$ auf. Der Zeitabstand bzw. der Phasenabstand ($\Delta\phi_{variabel}$) zwischen den Abtastimpulsen der variablen Abtastimpulsfolge und den Abtastimpulsen der konstanten Abtastimpulsfolge sind variabel in Abhängigkeit von dem Datenempfangssignal einstellbar bzw. programmierbar.

Je stärker das Augendiagramm des Datenempfangssignals geschlossen ist, d.h. je größer die durch den Übertragungskanal hervorgerufenen Störungen sind, desto näher werden die Abtastimpulse der variablen Abtastimpulsfolge an den zugehörigen Abtastimpuls der konstanten Abtastimpulsfolge herangeführt. Beispielsweise wird die variable Phasendifferenz ($\Delta\phi_{variabel}$) zwischen den Abtastimpulsen $S_{11}$, $S_{12}$ der variablen Abtastimpulsfolge und dem Abtastimpuls $S_1$ der konstanten Abtastimpulsfolge verringert, wenn das Augendiagramm merklich stärker schließt, d.h. der Amplituden- und Phasenjitter zunimmt. Die Verschiebung der Abtastimpulse $S_{11}$, $S_{12}$, $S_{31}$, $S_{32}$ in Abhängigkeit von dem Datenempfangssignal ermöglicht eine Abtastung mit maximaler Leistungsbewertung des Datenempfangssignals, d.h. mit maximaler Ausnutzung der Signalenergie des Datenempfangssignals.

Das Datenempfangssignal (Data In) wird durch mehrere parallel zueinander verschaltete Entscheider bzw. Flip-Flops abgetastet, die mit den zeitversetzten Abtastimpulsen getaktet werden. Die am Ausgang Q der Flip-Flops anliegenden Abtastdatenwerden werden Mehrfachentscheidern bzw. einer Phasenausweteschaltung zugeführt.

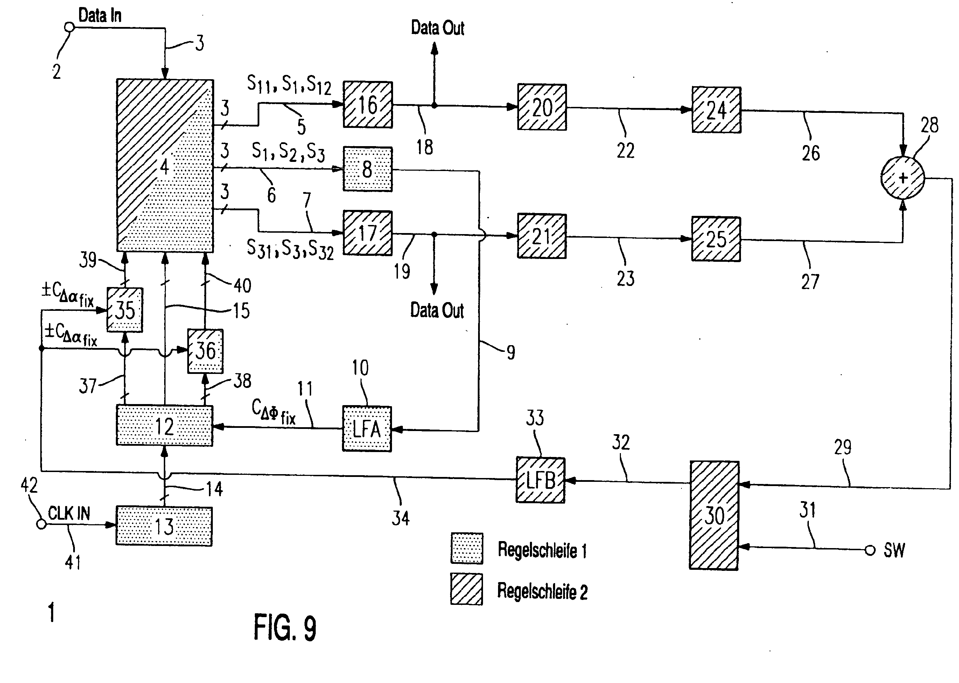

Figur 9 zeigt ein Blockdiagramm einer Abtastphasenregelungsschaltung gemäß der Erfindung. Die Abtastphasenregelungsschaltung 1 empfängt über einen Dateneingang 2 ein serielles Dateneingangssignal. Das empfangene serielle Dateneingangssignal (Data In) wird über eine interne Leitung 3 einem Abtaster 4 zugeführt. Der Abtaster 4 besteht beispielsweise, wie in Figur 8 dargestellt, aus mehreren parallel zueinander verschalteten Flip-Flops. Die durch die Abtastimpulse ($S_i$) abgetasteten Datenwerte werden von den Signalausgängen (Q) der Flip-Flops des Abtasters 4 über Datenleitungsbusse 5, 6, 7 abgegeben.

Die Abtastdatenwerte des $S_1$, $S_2$, $S_3$ die durch die konstante Abtastimpulsfolge mit äquidistanten Abtastimpulsen erzeugt werden, werden einer Phasenausweteschaltung 8 zugeführt. Die Phasenausweteschaltung 8 ist ausgangsseitig über eine Leitung 9 mit einem digitalen Schleifenfilter 10 verbunden. An das digitale Schleifenfilter 10 ist über eine Leitung 11 ein Hauptphasenschieberschaltkreis 12 angeschlossen.

Die Abtastphasenregelungsschaltung 1 enthält einen Mehrphasengenerator 13, bei dem es sich um einen Delay-Looked-Loop DLL oder eine Phasenregelschleife PLL handelt. Am Dateneingang 42 wird über die Signalleitung 41 der Eingangstakt CLK IN dem Mehrphasengenerator zugeführt. Der Mehrphasengenerator 13 generiert ein Mehrphasensignal, das über einen internen Signalbus 14 an den Haupt-Phasenschieber 12 angelegt wird. Der Haupt-Phasenschieber 12 führt eine Phasenverschiebung des generierten Mehrphasensignals in Abhängigkeit von dem gefilterten Ausgangssignal der Phasenausweteschaltung 8 durch. Der Haupt-Phasenschieber 12 ist ausgangsseitig über einen Signalbus 15 mit dem Abtaster 4 verbunden. Der Haupt-Phasenschieber 12 gibt über die Signalleitung 15 die Abtastimpulse zur Erzeugung der Abtastdatenwerte bzw. Samples $S_1$, $S_2$, $S_3$ an die Takteingänge des zugehörigen Flip-Flops innerhalb des Abtasters 4 ab.

Der Abtaster 4, die Phasenausweteschaltung 8, das nachgeschaltete digitale Filter 10 sowie der Haupt-Phasenschieber 12 bilden zusammen eine Phasenregelschleife (Regelschleife 1), die dafür sorgt, dass das Abtastsignal auf die Phase des empfangenen Dateneingangssignals Data In eingeregelt wird. Dabei wird die Phasenabweichung zwischen dem Abtastsignal und der Phase des empfangenen Datensignals zur Erzeugung eines eingeregelten Abtastsignals minimiert. Im eingeregelten Zustand des Abtastsignals ist der Abtastzeitpunkt genau zeitsynchron mit dem Signalflankenwechsel des Datenempfangssignals.

Die Abtastdatenwerte $S_{11}$, $S_1$, $S_{12}$ bilden ein Gruppe von Abtastdatenwerten und werden über die Datenleitung 5 einem Mehrfachentscheiderschaltkreis 16 zugeführt. In gleicher Weise bilden die Abtastdatenwerte $S_{31}$, $S_3$, $S_{32}$ eine zweite Gruppe und werden über die Datenleitungen 7 einem weiteren Mehrfachentscheider 17 zugeführt. Die Mehrfachentscheider 16, 17 können beispielsweise als eine kombinatorische Logikschaltung implementiert werden. Die Mehrfachentscheider 16, 17 sind vorzugsweise derart ausgelegt, dass mindestens zwei Abtastdatenwerte $S_i$ den gleichen Zustand bzw. logischen Datenwert aufweisen, damit der Mehrfachentscheider einen entsprechenden Datenwert an seinem Ausgang abgibt. Die Ausgänge der Mehrfachentscheider 16, 17 sind jeweils über eine Leitung 18, 19 mit nachgeschalteten Gleichrichtern 20, 21 verbunden. Den Gleichrichtern 20, 21 sind ausgangsseitig über Leitungen 22, 23 Summierer 24, 25 nachgeschaltet. Die Ausgänge der Summierer 24, 25 sind über Leitungen 26, 27 an einen Addierer 28 angeschlossen, der die anliegenden Signale addiert und über eine Leitung 29 an einen Komparatorschaltkreis 30 abgibt. Die von dem Mehrfachentscheidern 16, 17 abgegebenen Datenwerte werden durch die Summierer 24, 25 aufsummiert und anschließend durch den Addierer 28 zu einem Summenwert addiert. Die beiden Summierer 24, 25 und der Addierer 28 addieren somit die von dem Mehrfachentscheider 16, 17 abgegebenen Abtastdatenwerte zu einem Summenwert.

Der an der Leitung 29 anliegende Summenwert wird durch den Komparatorschaltkreis 30 mit einem an einer Leitung 31 anliegenden Schwellenwert SW verglichen. Der Schwellenwert SW wird entweder extern angelegt oder ist in die Abtastregelungsschaltung einprogrammiert. Der Komparator 30 erzeugt ein Vergleichsausgangssignal, das über eine Leitung 32 an ein nachgeschaltetes digitales Schleifenfilter 33 abgegeben wird.

Das gefilterte Ausgangssignal wird über Leitungen 34 zum Einstellen von Neben-Phasenschiebern 35, 36 eingesetzt. Die Neben-Phasenschieber 35, 36 sind eingangsseitig über Signalleitungen 37, 38 an den Haupt-Phasenschieber 12 angeschlossen. Die Neben-Phasenschieber 35, 36 verschieben die Phasenlage der Abtastimpulse für die Abtastdatenwerte $S_{11}$, $S_{12}$, $S_{31}$, $S_{32}$ und geben diese phasenverschobenen Abtastimpulse über Leitungen 39, 40 an die entsprechenden Abtast-Flip-Flops innerhalb des Abtasters 4 ab.

Die Mehrfachentscheider 16, 17, die Gleichrichter 20, 21, die Integrationseinrichtung 24, 25, 28, der Komparator 30 und das nachgeschaltete digitale Schleifenfilter 33 bilden zusammen mit den Neben-Phasenschiebern 35, 36 eine Maximalwertregelungsschleife (Regelschleife 2) innerhalb der Abtastphasenregelungsschaltung 1. Durch die Maximalwertregelungsschleife werden die Abtastimpulse für die Abtastdatenwerte $S_{11}$, $S_{12}$, $S_{31}$, $S_{32}$ in Abhängigkeit von der Form bzw. dem Augendiagramm des Datenempfangssignals justiert, so dass das Datenempfangssignal zu optimalen Zeitpunkten durch den Abtaster abgetastet wird.

Durch die Mehrfachentscheider 16, 17 ist eine sichere Abtastung des Datenempfangssignals gewährleistet. Da die Abtastzeitpunkte für die zusätzlichen Abtastdatenwerte $S_{11}$, $S_{12}$, $S_{31}$, $S_{32}$ variabel einstellbar sind, kann die Bit-Fehlerrate BER je nach Signalform optimiert werden, ohne dass eine Überabtastung des Datenempfangssignals erforderlich ist. Hierdurch kann der schaltungstechnische Aufwand der Abtastphasenregelungsschaltung 1 minimiert werden.

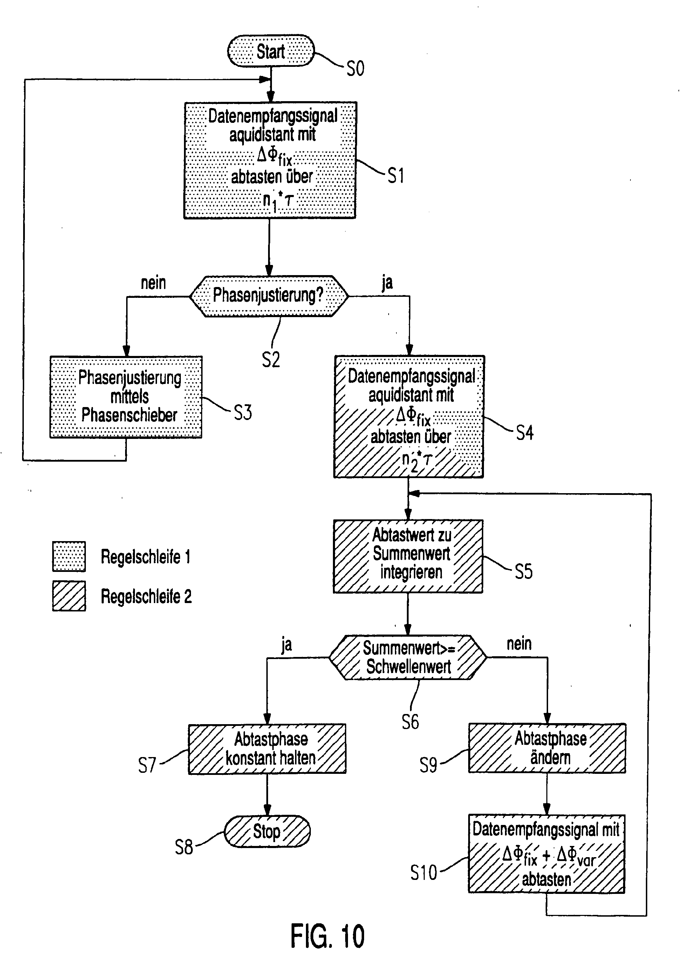

Figur 10 zeigt ein Ablaufdiagramm der bevorzugten Ausführungsform des erfindungsgemäßen Abtastverfahrens.

Nach einem Startschritt $S_0$ wird das an dem Signaleingang 2 anliegende Datenempfangssignal Data In zunächst äquidistant mit einem ersten Abtastsignal, das aus äquidistanten Abtastimpulsen besteht über eine vorbestimmte Zeitdauer $zD1 = n_1 \cdot T$ in einem Schritt S1 abgetastet.

In einem Schritt S2 wird geprüft, ob eine Phasenjustierung erreicht worden ist oder nicht. Eine Phasenjustierung liegt vor, wenn der Abtastdatenimpuls für den Abtastdatenwert $S_2$ genau zeitsynchron mit dem Signalflankenwechsel des empfangenen Datensignals Data In ist. Im eingeregelten Zustand des Abtastsignals ist der Abtastdatenwert $S_2$ genau Null.

Ergibt die Abfrage in S2, dass noch keine Phasenjustierung des Abtastsignals erfolgt ist, wird die Phasenjustierung im Schritt S3 durchgeführt und der Vorgang kehrt zu Schritt S1 zurück. Die Phasenjustierung im Schritt S3 erfolgt über die Phasenregelschleife der Abtastphasenregelungsschaltung 1, d.h. über die Phasenauswerteschaltung 8 nachgeschaltete digitale Filter 10 und den Haupt-Phasenschieber 12.

Nachdem die Phasenabweichung zwischen dem Abtastsignal und der Phase des empfangenen Datensignals in der aus den Schritte S1 bis S3 bestehenden Phasenregelschleife minimiert worden ist, wird das Datenempfangssignal in einem Schritt S4 erneut über eine vorbestimmte Zeitdauer $zD2 = n_2 \cdot T$ abgetastet.

Dabei gilt $n_2 = k \times n1$, wobei $k \geq 1$ ist und k beispielsweise 10 betragen kann.

Die Abtastdatenwerte werden in einem Schritt S5 durch die Mehrfachentscheider 16, 17 ausgewertet, wobei die Ausgangsdatenwerte der Mehrfachentscheider 16, 17 anschließend vorzugsweise gleichgerichtet werden. Die Abtastdatenwerte werden schließlich durch die Summierer 24, 25 und den Addierer 28 zu einem Summenwert integriert und an den Komparator 30 angelegt.

In einem Schritt S6 wird der integrierte Summenwert durch den Komparator 30 mit dem einstellbaren Schwellenwert SW verglichen.

Ist der Summenwert größer oder gleich dem Schwellenwert SW wird in einem Schritt S7 die Abtastphase $\Delta\phi_{variabel}$ der Abtastdatenwerte $S_{11}$, $S_{12}$, $S_{31}$, $S_{32}$ konstant gehalten und das Verfahren im Schritt S8 beendet. Wird umgekehrt durch den Komparator 30 festgestellt, dass der Summenwert unter dem einstellbaren Schwellenwert SW liegt, wird die Abtastphase $\Delta\phi_{variabel}$ der Abtastdatenwert $S_{11}$, $S_{12}$, $S_{31}$, $S_{32}$ im Schritt S9 geändert. Die Abtastphase des Abtastsignals wird im Schritt S9 an die Signalform des Datenempfangssignals angepasst bzw. optimiert. Dabei wird der Phasenabstand zwischen den Abtastwerten $S_{11}$, $S_{12}$ und dem Abtastimpuls $S_1$ der äquidistanten Abtastimpulsfolge bzw. die Phasendifferenz zwischen den Abtastimpulsen $S_{31}$, $S_{32}$ und dem Abtastimpuls $S_3$ verringert, je kleiner das Augendiagramm ist bzw. je größer der Amplituden- und Phasenjitter ist.

Nachdem die Feinjustierung der Abtastzeitpunkte im Schritt S9 erfolgt ist, wird im Schritt S10 das Datenempfangsignal erneut abgetastet. Die Maximalwertregelung der Schritte S5, S6, S9, S10 erfolgt so lange, bis der Summenwert den Schwellenwert im Schritt S6 überschreitet und die Abtastphasenregelung abgeschlossen ist.

Wenn der integrierte Summenwert den Schwellenwert SW im Schritt S6 überschreitet, wird vorzugsweise ein Detektionssignal erzeugt, das den eingeregelten Zustand anzeigt. Nach erfolgreichem Abschluss der Abtastphasenregelung werden die an den Signalausgängen der Mehrfachentscheider 16, 17 anliegenden Daten zur weiteren Datenverarbeitung (Data Out) ausgelesen.

Bei dem in Figur 8 dargestellten Verfahren werden lediglich zwei zusätzliche Abtastdatenwerte ($S_{11}$, $S_{12}$ bzw. $S_{31}$, $S_{32}$) zur Datenrückgewinnung erzeugt. Die Anzahl der zusätzlichen Abtastdatenwerte kann bei alternativen Ausführungsformen des erfindungsgemäßen Abtastverfahrens weiter erhöht werden.

Das erfindungsgemäße Verfahren kann vielseitig schaltungstechnisch realisiert werden. Das erfindungsgemäße Verfahren eignet sich insbesondere für mehrkanalige SERDES-Bausteine zur Datenübertragung in einer relativ stark verrauschten Applikationsumgebung und zur Hochintegration mit zusätzlichen Signalverarbeitungseinheiten, insbesondere im WAN/LAN-Bereich. Das erfindungsgemäße Verfahren kann darüber hinaus für die Datenübertragung zwischen Speichermedien innerhalb von computergestützten Anwendungen eingesetzt werden.

Das erfindungsgemäße Verfahren ist besonders geeignet für Datenübertragungsraten, die oberhalb eines Frequenzbereichs von 1 Gigahertz liegen.

Bezugszeichenliste

| | |
|---|---|
| 1 | Abtastphasenregelungsschaltung |
| 2 | Dateneingang |
| 3 | Interne Datenleitung |
| 4 | Abtastet |
| 5 | Abtastdatenleitung |
| 6 | Abtastdatenleitung |
| 7 | Abtastdatenleitung |
| 8 | Phasenauswerteschaltung |
| 9 | Leitung |
| 10 | Digitales Schleifenfilter |
| 11 | Leitung |
| 12 | Haupt-Phasenschieber |
| 13 | Mehrphasengenerator |
| 14 | Signalleitungen |
| 15 | Taktleitungen |
| 16 | Mehrfachentscheider |
| 17 | Mehrfachentscheider |
| 18 | Leitung |
| 19 | Leitung |
| 20 | Gleichrichter |
| 21 | Gleichrichter |
| 22 | Leitung |
| 23 | Leitung |
| 24 | Summierer |
| 25 | Summierer |
| 26 | Leitung |
| 27 | Leitung |
| 28 | Addierer |
| 29 | Leitung |
| 30 | Komparator |
| 31 | Leitung |
| 32 | Leitung |
| 33 | Digitales Schleifenfilter |
| 34 | Leitung |
| 35 | Neben-Phasenschieber |
| 36 | Neben-Phasenschieber |
| 37 | Leitung |
| 38 | Leitung |
| 39 | Leitung |
| 40 | Leitung |
| 41 | Leitung |
| 42 | Dateneingang |

**Patentansprüche**

1. Verfahren zur Abtastphasenregelung für die Takt- und Datenrückgewinnung eines Datensignals mit den folgenden Schritten:

   (a) Abtasten (S1) des empfangenen Datensignals mit einem ersten Abtastsignal, das aus äquidistanten Abtastimpulsen besteht;
   (b) Minimieren (S2, S3) der Phasenabweichung zwischen dem ersten Abtastsignal und der Phase des empfangenen Datensignals zur Erzeugung eines eingeregelten zweiten Abtastsignals;
   (c) Abtasten (S4) des empfangenen Datensignals mit dem zweiten eingeregelten Abtastsignal zur Erzeugung von Abtastdatenwerten ;
   (d) Integrieren (S5) der Abtastdatenwerte des abgetasteten Datensignals zu einem Summenwert; und
   (e) Regeln in einer Rückkopplungsschleife der Phase von Abtastimpulsen des eingeregelten zweiten Abtastsignals bis der integrierte Summenwert einen einstellbaren Schwellenwert (SW) überschreitet.

2. Verfahren nach Anspruch 1
   **dadurch gekennzeichnet,**
   **dass** ein Detektionssignal erzeugt wird, wenn der integrierte Summenwert den einstellbaren Schwellenwert (SW) überschreitet, wobei das Detektionssignal den eingeregelten Zustand anzeigt.

3. Verfahren nach Anspruch 1 oder 2
   **dadurch gekennzeichnet,**
   **dass** zum Einregeln der Phase des ersten Abtastsignals die Phasenabweichung zwischen dem Abtastsignal und dem empfangenen Datensignal durch eine Phasenauswerteanordnung (8) ausgewertet wird und
   die Phase des Abtastsignals durch einen Haupt-Phasenschieber (12) verändert wird, bis die Phasenabweichung Null beträgt.

4. Verfahren nach einem der vorangehenden Ansprüche
   **dadurch gekennzeichnet,**
   **dass** das eingeregelte zweite Abtastsignal aus mindestens zwei zeitversetzten Abtastimpulsfolgen besteht,
   wobei Abtastimpulse ($S_1$, $S_2$, $S_3$) einer konstanten Abtastimpulsfolge einen konstanten Zeitabstand ($\Delta\phi_{fix}$) zueinander aufweisen und
   Abtastimpulse ($S_{11}$, $S_{12}$, $S_{31}$, $S_{32}$) einer variablen Abtastimpulsfolge einen variablen Zeitabstand ($\Delta\phi_{variabel}$) aufweisen.

5. Verfahren nach einem der vorangehenden Ansprüche
**dadurch gekennzeichnet,**
**dass** das empfangene Datensignal (Data In) aus einer Folge von Datenimpulsen mit konstanter Datenimpulsdauer (UI) besteht.

6. Verfahren nach einem der vorangehenden Ansprüche
**dadurch gekennzeichnet,**
**dass** der Zeitabstand ($\Delta\phi_{fix}$) zwischen den Abtastimpulsen ($S_1$, $S_2$, $S_3$) der konstanten Abtastimpulsfolge gleich der halben Datenimpulsdauer (UI/2) ist.

7. Verfahren nach einem der vorangehenden Ansprüche
**dadurch gekennzeichnet,**
**dass** im eingeregelten Zustand des zweiten Abtastsignals die konstante Abtastimpulsfolge aus ersten Abtastimpulsen ($S_2$), die zeitsynchron mit dem Signalflankenwechsel des empfangenen Datensignals sind, und aus
zweiten Abtastimpulsen ($S_1$, $S_3$) besteht, die um eine halbe Datenimpulsdauer (UI/2) zeitversetzt zu dem Signalflankenwechsel des empfangenen Datensignals sind.

8. Verfahren nach einem der vorangehenden Ansprüche
**dadurch gekennzeichnet,**
**dass** der Zeitabstand ($\Delta\phi_{variabel}$) zwischen den Abtastimpulsen ($S_{11}$, $S_{12}$, $S_{31}$, $S_{32}$) der variablen Abtastimpulsfolge und den zweiten Abtastimpulsen ($S_1$, $S_3$) der konstanten Abtastimpulsfolge verkleinert wird bis der integrierte Summenwert den einstellbaren Schwellenwert (SW) überschreitet.

9. Verfahren nach einem der vorangehenden Ansprüche
**dadurch gekennzeichnet,**
**dass** ein durch einen zweiten Abtastimpuls ($S_1$, $S_3$) der konstanten Abtastimpulsfolge erzeugte Abtastdatenwert und die durch die beiden benachbarten Abtastimpulse ($S_{11}$, $S_{12}$; $S_{31}$, $S_{32}$) der variablen Abtastimpulsfolge erzeugten Abtastdatenwerte jeweils an einen Mehrfachentscheider (16, 17) angelegt werden, der in Abhängigkeit von den angelegten Abtastdatenwerten ein logisches Ausgangssignal erzeugt.

10. Verfahren nach Anspruch 9
**dadurch gekennzeichnet,**
**dass** die logischen Ausgangssignale der Mehrfachentscheider (16, 17) jeweils durch Gleichrichter (20, 21) gleichgerichtet werden.

11. Verfahren nach einem der vorangehenden Ansprüche
**dadurch gekennzeichnet,**

**dass** das empfangene Datensignal (Data In) ein serielles Datensignal ist.

12. Verfahren nach Anspruch 11
**dadurch gekennzeichnet,**
**dass** das serielle Datensignal (Data In) durch parallel verschaltete Flip-Flops eines Abtasters (4) abgetastet wird.

13. Verfahren nach einem der vorangehenden Ansprüche
**dadurch gekennzeichnet,**
**dass** der integrierte Summenwert mit dem Schwellenwert durch einen Komparator (30) verglichen wird.

14. Verfahren nach einem der vorangehenden Ansprüche
**dadurch gekennzeichnet,**
**dass** der Schwellenwert (SW) einprogrammiert wird.

15. Verfahren nach einem der vorangehenden Ansprüche
**dadurch gekennzeichnet,**
**dass** der Komparator (30) ein Vergleichsausgangssignal erzeugt, das durch ein nachgeschaltetes Filter (33) gefiltert wird.

16. Verfahren nach einem der vorangehenden Ansprüche
**dadurch gekennzeichnet,**
**dass** das gefilterte Vergleichsausgangssignal an Neben-Phasenschieber (35, 36) angelegt wird, die den variablen Zeitabstand ($\Delta\phi_{variabel}$) zwischen Abtastimpulsen der variablen Abtastimpulsfolge und den zweiten Abtastimpulsen ($S_1$, $S_3$) der konstanten Abtastimpulsfolge in Abhängigkeit von dem gefilterten Vergleichsausgangssignal einstellen.

17. Verfahren nach einem der vorangehenden Ansprüche
**dadurch gekennzeichnet,**
**dass** die logischen Ausgangssignale der Mehrfachentscheider (16, 17) durch eine Datenverarbeitungseinheit ausgewählt werden, wenn das Detektionssignal den eingeregelten Zustand anzeigt.

**Claims**

1. Method for sampling phase control for the clock and data recovery of a data signal having the following steps:

    (a) Sampling (S1) of the received data signal with a first sampling signal comprising equidistant sampling pulses;

(b) Minimization (S2, S3) of the phase deviation between the first sampling signal and the phase of the received data signal for the purpose of generating an adjusted second sampling signal;

(c) Sampling (S4) of the received data signal with the second adjusted sampling signal for the purpose of generating sampling data values;

(d) Integration (S5) of the sampling data values of the sampled data signal to form a summation value; and

(e) Control in a feedback loop of the phase of sampling pulses of the adjusted second sampling signal until the integrated summation value exceeds a threshold value (SW) that can be set.

2. Method according to claim 1,
   **characterized**
   **in that** a detection signal is generated if the integrated summation value exceeds the threshold value (SW) that can be set, the detection signal indicating the adjusted state.

3. Method according to claim 1 or 2,
   **characterized**
   **in that**, for the adjustment of the phase of the first sampling signal, the phase deviation between the sampling signal and the received data signal is evaluated by a phase evaluation arrangement (8) and the phase of the sampling signal is altered by a main phase shifter (12) until the phase deviation amounts to zero.

4. Method according to one of the preceding claims,
   **characterized**
   **in that** the adjusted second sampling signal comprises at least two temporally offset sampling pulse trains,
   sampling pulses (S1, S2, S3) of a constant sampling pulse train having a constant time interval ($\Delta\phi_{fix}$) with respect to one another and
   sampling pulses ($S_{11}$, $S_{12}$, $S_{31}$, $S_{32}$) of a variable sampling pulse train having a variable time interval ($\Delta\phi_{variable}$).

5. Method according to one of the preceding claims,
   **characterized**
   **in that** the received data signal (Data In) comprises a train of data pulses with constant data pulse duration (UI).

6. Method according to one of the preceding claims,
   **characterized**
   **in that** the time interval ($\Delta\phi_{fix}$) between the sampling pulses ($S_1$, $S_2$, $S_3$) of the constant sampling pulse train is equal to half the data pulse duration (UI/2).

7. Method according to one of the preceding claims,
   **characterized**

**in that**, in the adjusted state of the second sampling signal, the constant sampling pulse train comprises first sampling pulses ($S_2$), which are time-synchronous with the signal edge change of the received data signal, and
second sampling pules ($S_1$, $S_3$), which are temporally offset by half a data pulse duration (UI/2) with respect to the signal edge change of the received data signal.

8. Method according to one of the preceding claims,
   **characterized**
   **in that** the time interval ($\Delta\phi_{variable}$) between the sampling pulses ($S_{11}$, $S_{12}$, $S_{31}$, $S_{32}$) of the variable sampling pulse train and the second sampling pulses ($S_1$, $S_3$) of the constant sampling pulse train is reduced until the integrated summation value exceeds the threshold value (SW) that can be set.

9. Method according to one of the preceding claims,
   **characterized**
   **in that** a sampling data value generated by a second sampling pulse ($S_1$, $S_3$) of the constant sampling pulse train and the sampling data values generated by the two adjacent sampling pulses ($S_{11}$, $S_{12}$; $S_{31}$, $S_{32}$) of the variable sampling pulse train are in each case applied to a multiple decision unit (16, 17), which generates a logical output signal in a manner dependent on the applied sampling data values.

10. Method according to claim 9,
    **characterized**
    **in that** the logical output signals of the multiple decision units (16, 17) are in each case rectified by rectifiers (20, 21).

11. Method according to one of the preceding claims,
    **characterized**
    **in that** the received data signal (Data In) is a serial data signal.

12. Method according to claim 11,
    **characterized**
    **in that** the serial data signal (Data In) is sampled by parallel-connected flip-flops of a sampler (4).

13. Method according to one of the preceding claims,
    **characterized**
    **in that** the integrated summation value is compared with the threshold value by a comparator (30).

14. Method according to one of the preceding claims,
    **characterized**
    **in that** the threshold value (SW) is programmed in.

15. Method according to one of the preceding claims,
    **characterized**
    **in that** the comparator (30) generates a comparison output signal which is filtered by a filter (33) connected downstream.

**16.** Method according to one of the preceding claims, **characterized in that** the filtered comparison output signal is applied to secondary phase shifters (35, 36), which set the variable time interval ($\Delta\phi_{variable}$) between sampling pulses of the variable sampling pulse train and the second sampling pulses ($S_1$, $S_3$) of the constant sampling pulse train in a manner dependent on the filtered comparison output signal.

**17.** Method according to one of the preceding claims, **characterized in that** the logical output signals of the multiple decision units (16, 17) are selected by a data processing unit if the detection signal indicates the adjusted state.

**Revendications**

**1.** Procédé pour le réglage de phase d'échantillonnage pour la récupération d'horloge et de données d'un signal de données avec les étapes suivantes :

(a) échantillonnage (S1) du signal de données reçu avec un premier signal d'échantillonnage constitué d'impulsions d'échantillonnage équidistantes ;
(b) minimalisation (S2, S3) de l'écart de phase entre le premier signal d'échantillonnage et la phase du signal de données reçu pour la génération d'un deuxième signal d'échantillonnage réglé ;
(c) échantillonnage (S4) du signal de données reçu avec le deuxième signal d'échantillonnage réglé pour la génération de valeurs de données d'échantillonnage ;
(d) intégration (S5) des valeurs de données d'échantillonnage du signal de données échantillonné pour obtenir une valeur cumulée ; et
(e) réglage dans une boucle de rétroaction de la phase d'impulsions d'échantillonnage du deuxième signal d'échantillonnage réglé jusqu'à ce que la valeur cumulée intégrée dépasse une valeur seuil (SW) réglable.

**2.** Procédé selon la revendication 1, **caractérisé en ce qu'** un signal de détection est généré lorsque la valeur cumulée intégrée dépasse la valeur seuil (SW) réglable, le signal de détection signalant l'état réglé.

**3.** Procédé selon la revendication 1 ou 2, **caractérisé en ce que** pour le réglage de la phase du premier signal d'échantillonnage, l'écart de phase entre le signal d'échantillonnage et le signal de données reçu est évalué par un dispositif d'évaluation de phase (8) et la phase du signal d'échantillonnage est modifiée par un déphaseur principal (12) jusqu'à ce que l'écart de phase atteigne zéro.

**4.** Procédé selon l'une quelconque des revendications précédentes, **caractérisé en ce que** le deuxième signal d'échantillonnage réglé est constitué d'au moins deux suites d'impulsions d'échantillonnage décalées dans le temps, des impulsions d'échantillonnage ($S_1$, $S_2$, $S_3$) d'une suite d'impulsions d'échantillonnage constante comportant, entre elles, un intervalle de temps constant ($\Delta\Phi_{fix}$) et des impulsions d'échantillonnage ($S_{11}$, $S_{12}$, $S_{31}$, $S_{32}$) d'une suite d'impulsions d'échantillonnage variable comportant un intervalle de temps variable ($\Delta\Phi_{variable}$).

**5.** Procédé selon l'une quelconque des revendications précédentes, **caractérisé en ce que** le signal de données reçu (Data In) est constitué d'une suite d'impulsions de données avec une durée d'impulsion de données (UI) constante.

**6.** Procédé selon l'une quelconque des revendications précédentes, **caractérisé en ce que** l'intervalle de temps ($\Delta\phi_{fix}$) entre les impulsions d'échantillonnage ($S_1$, $S_2$, $S_3$) de la suite d'impulsions d'échantillonnage constante est égal à la moitié de la durée d'impulsion de données (UI/2).

**7.** Procédé selon l'une quelconque des revendications précédentes, **caractérisé en ce que** dans l'état réglé du deuxième signal d'échantillonnage, la suite d'impulsions d'échantillonnage constante est constituée de premières impulsions d'échantillonnage ($S_2$) qui sont synchrones dans le temps avec le changement de flanc de signal du signal de données reçu, et de deuxièmes impulsions d'échantillonnage ($S_1$, $S_3$) qui sont décalées dans le temps d'une demi-durée d'impulsion de données (UI/2) par rapport au changement de flanc de signal du signal de données reçu.

**8.** Procédé selon l'une quelconque des revendications précédentes, **caractérisé en ce que** l'intervalle de temps ($\Delta\Phi_{variable}$) entre les impulsions d'échantillonnage ($S_{11}$, $S_{12}$, $S_{31}$, $S_{32}$) de la suite d'impulsions d'échantillonnage variable et les deuxièmes impulsions d'échantillonnage ($S_1$, $S_3$) de

la suite d'impulsions d'échantillonnage constante est diminué jusqu'à ce que la valeur cumulée intégrée dépasse la valeur seuil (SW) réglable.

9. Procédé selon l'une quelconque des revendications précédentes,
**caractérisé en ce qu'**
une valeur de données d'échantillonnage générée par une deuxième impulsion d'échantillonnage ($S_1$, $S_3$) de la suite d'impulsions d'échantillonnage constante et les valeurs de données d'échantillonnage générées par les deux impulsions d'échantillonnage voisines ($S_{11}$, $S_{12}$ ; $S_{31}$, $S_{32}$) de la suite d'impulsions d'échantillonnage variable sont à chaque fois appliquées à un décideur multiple (16, 17) qui génère un signal de sortie logique en fonction des valeurs de données d'échantillonnage appliquées.

10. Procédé selon la revendication 9,
**caractérisé en ce que**
les signaux de sortie logiques des décideurs multiples (16, 17) sont à chaque fois redressés par des redresseurs (20, 21).

11. Procédé selon l'une quelconque des revendications précédentes,
**caractérisé en ce que**
le signal de données reçu (Data In) est un signal de données séquentiel.

12. Procédé selon la revendication 11,
**caractérisé en ce que**
le signal de données séquentiel (Data In) est échantillonné par des flip-flops d'un échantillonneur (4) connectés en parallèle.

13. Procédé selon l'une quelconque des revendications précédentes,
**caractérisé en ce que**
la valeur cumulée intégrée est comparée avec la valeur seuil (SW) par un comparateur (30).

14. Procédé selon l'une quelconque des revendications précédentes,
**caractérisé en ce que**
la valeur seuil (SW) est programmée.

15. Procédé selon l'une quelconque des revendications précédentes,
**caractérisé en ce que**
le comparateur (30) génère un signal de sortie de comparaison qui est filtré par un filtre (33) connecté en aval.

16. Procédé selon l'une quelconque des revendications précédentes,
**caractérisé en ce que**
le signal de sortie de comparaison filtré est appliqué à des déphaseurs complémentaires (35, 36) qui règlent l'intervalle de temps variable ($\Delta\phi_{variable}$) entre des impulsions d'échantillonnage de la suite d'impulsions d'échantillonnage variable et les deuxièmes impulsions d'échantillonnage ($S1$, $S3$) de la suite d'impulsions d'échantillonnage constante en fonction du signal de sortie de comparaison filtré.

17. Procédé selon l'une quelconque des revendications précédentes,
**caractérisé en ce que**
les signaux de sortie logiques des décideurs multiples (16, 17) sont sélectionnés par une unité de traitement de données lorsque le signal de détection signale l'état réglé.

FIG. 1

FIG. 2

FIG. 3

FIG. 4

FIG. 5 (Stand der Technik)

FIG. 6

FIG. 7

Data In  $S_{11}$   $S_1$   $S_{12}$   $S_2$   $S_{31}$   $S_3$   $S_{32}$

U(t)

Jitterfrei

mit Jitter

t

$1UI = T/2$   $1UI = T/2$

$-\Delta\alpha_{var}$   $+\Delta\alpha_{var}$   $-\Delta\alpha_{var}$   $+\Delta\alpha_{var}$

$S_{11}$   $S_{12}$   $S_{31}$   $S_{32}$

$\Delta\Phi_{fix} = \dfrac{T}{4} = \dfrac{UI}{2}$

$-\Delta\alpha_{var}$   $+\Delta\alpha_{var}$   $-\Delta\alpha_{var}$   $+\Delta\alpha_{var}$

$\Delta\Phi_{fix}$   $S_1$   $\Delta\Phi_{fix}$   $S_2$   $\Delta\Phi_{fix}$   $S_3$   $\Delta\Phi_{fix}$

-180°   -90°   0°   +90°   +180°

FIG. 8

FIG. 9

Regelschleife 1

Regelschleife 2

```
                          ┌──────────┐
                          │  Start   │────── S0
                          └────┬─────┘
                               │
                               ▼
                    ┌────────────────────┐
                    │  Datenempfangssignal │
                    │  aquidistant mit     │
                    │     ΔΦ_fix           │────── S1
                    │  abtasten über       │
                    │     n_1*τ            │
                    └──────────┬──────────┘
                               │
      nein                     ▼                    ja
  ┌──────────────< Phasenjustierung? >──────────────┐
  │                     └──────┬──────┘              │
  │                            S2                    │
  ▼                                                  ▼
┌──────────────┐                        ┌──────────────────────┐
│Phasenjustierung│                      │ Datenempfangssignal   │
│   mittels    │────── S3               │ aquidistant mit       │
│ Phasenschieber│                       │    ΔΦ_fix             │────── S4
└──────────────┘                        │ abtasten über         │
                                        │    n_2*τ              │
                                        └──────────┬───────────┘
                                                   │
  ░░░ Regelschleife 1                              ▼
                                        ┌──────────────────────┐
  ╱╱╱ Regelschleife 2                   │ Abtastwert zu         │
                                        │ Summenwert            │────── S5
                                        │ integrieren           │
                                        └──────────┬───────────┘
                                                   │
         ja                                        ▼              nein
    ┌────────────< Summenwert>=                            >──────────┐
    │                  Schwellenwert                                  │
    │                   └──────┬──────┘                               │
    ▼                          S6                                     ▼
┌──────────────┐                              ┌──────────────┐
│  Abtastphase │                              │  Abtastphase │
│konstant halten│──── S7                 S9 ──│   ändern     │
└──────┬───────┘                              └──────┬───────┘
       │                                             │
       ▼                                             ▼
  ┌─────────┐                          ┌──────────────────────┐
  │  Stop   │                          │ Datenempfangssignal mit│
  └─────────┘── S8                     │  ΔΦ_fix + ΔΦ_var      │
                                  S10 ──│   abtasten            │
                                       └──────────────────────┘
```

# FIG. 10